# FASCICULE DE BREVET EUROPEEN

(11) **EP 0 603 218 B1**
(45) Date de publication et mention de la délivrance du brevet: **29.01.1997**
(21) Numéro de dépôt: 92918229.3
(22) Date de dépôt: 31.08.1992
(51) Int. Cl.: C01D 3/14, C01D 3/16, B01D 53/34

(54) **PROCEDE DE FABRICATION D'UNE SOLUTION AQUEUSE INDUSTRIELLE DE CHLORURE DE SODIUM**
Verfahren zur Herstellung einer wässrigen industriellen Natriumchloridlösung
METHOD FOR PRODUCING AN AQUEOUS INDUSTRIAL SODIUM CHLORIDE SOLUTION

(30) Priorité: 10.09.1991 BE 9100843
(43) Date de publication de la demande: 29.06.1994
(73) Titulaire: SOLVAY (Société Anonyme), B-1050 Bruxelles (BE)
(72) Inventeur: NINANE, Léon, F-54110 Dombasle-sur-Meurthe (FR); ADAM, Jean-François, F-54110 Dombasle-sur-Meurthe (FR); HUMBLOT, Cédric, F-54110 Dombasle-sur-Meurthe (FR)
(74) Mandataire: Anthoine, Paul
(86) Numéro de dépôt international: EP9200944
(87) Numéro de publication internationale: WO9304983

(56) Documents cités:
- EP-A- 0 087 934
- EP-A- 0 190 416
- PATENT ABSTRACTS OF JAPAN vol. 004, no. 159 (C-030)6 Novembre 1980
- IAN F. WHITE, T.F.O'BRIEN 'Modern Chlor-alkali Technology' Avril 1991

## Description

L'invention concerne un procédé pour épurer une fumée contenant du chlorure d'hydrogène et des métaux lourds et pour, simultanément, fabriquer une solution aqueuse de chlorure de sodium utilisable dans un procédé industriel.

Les solutions aqueuses de chlorure de sodium trouvent des applications importantes dans l'industrie. C'est le cas en particulier dans l'industrie de la fabrication du carbonate de sodium par le procédé de la soude à l'ammoniaque, ainsi que dans les procédés de fabrication électrolytique du chlore et de solutions aqueuses d'hydroxyde de sodium.

Ces procédés industriels requièrent en général des solutions aqueuses de chlorure de sodium de grande pureté, notamment en métaux polyvalents tels que le calcium, le magnésium, l'aluminium, le fer, le plomb et le zinc, par exemple. Cette exigence est particulièrement stricte dans le cas des procédés d'électrolyse mettant en oeuvre des membranes sélectivement perméables aux cations, telles que des membranes en polymère perfluorés comprenant des groupes fonctionnels dérivés d'acide carboxylique (GB-A-1375126). Dans ces procédés d'électrolyse on préconise généralement des solutions de chlorure de sodium dont la teneur en cations polyvalents, notamment en cations calcium, n'excède pas 0,1 ppm (GB-A-2005723).

Les solutions aqueuses destinées aux cellules d'électrolyse sont généralement obtenues par dissolution de sel gemme dans de l'eau (Chlorine, Its manufacture, Properties and Uses - J. S. Sconce - Reinhold Publishing Corporation, New York - 1962 - pages 119 et 123). Les saumures brutes obtenues par dissolution de sel gemme dans de l'eau ont toutefois, en général, une teneur trop élevée en cations polyvalents pour permettre leur utilisation dans les procédés d'électrolyse. A cet effet, on a proposé de les traiter sur des résines chélatantes du type Na, dans le but d'en extraire les cations polyvalents. (The American Institute of Chemical Engineers, N° 219, Vol. 78, 1982, pages 46-53 : J.J. Wolff and R.E. Anderson, Ion-exchange purification of feed brine for chlor-alkali electrolysis cells; the role of Duolite ES-467).

On connaît par ailleurs un procédé pour épurer une fumée contenant du chlorure d'hydrogène, selon lequel on traite cette fumée avec du bicarbonate de sodium de manière à décomposer le chlorure d'hydrogène et former du chlorure de sodium (US-A-4767605; SOLVAY & Cie, brochure Tr. 895/5c-B-1-1290). Selon ce procédé connu, on introduit du bicarbonate de sodium à l'état d'une poudre dans la fumée à épurer et on sépare de celle-ci un résidu solide contenant du chlorure de sodium. Lorsque la fumée traitée contient des métaux lourds, comme c'est généralement le cas des fumées produites par l'incinération des ordures ménagères ou municipales, le résidu solide de chlorure de sodium est contaminé par ces métaux lourds, qui sont ainsi la cause de difficultés pour l'entreposage ou le rejet de ce résidu.

Dans le document JP-55104632 on décrit un procédé pour l'épuration d'une fumée provenant d'un incinérateur et contenant des substances contaminantes (parmi lesquelles du chlorure d'hydrogène, des oxydes de soufre et des métaux lourds). Selon ce procédé connu, on traite la fumée dans un réacteur avec une solution aqueuse d'hydroxyde de sodium et on recueille du réacteur, une solution aqueuse de chlorure de sodium contenant les substances contaminantes de la fumée, à l'état dissous. On épure la solution aqueuse de chlorure de sodium pour la débarrasser de ces substances contaminantes dissoutes, puis on la soumet à une électrolyse dans une cellule à diaphragme pour reconstituer la solution aqueuse d'hydroxyle de sodium.

L'invention vise à fournir un procédé qui permette de valoriser le résidu solide de chlorure de sodium du procédé connu décrit ci-dessus, pour fabriquer une solution aqueuse de chlorure de sodium utilisable dans des procédés industriels.

En conséquence, l'invention concerne un procédé pour, en combinaison, épurer une fumée contenant du chlorure d'hydrogène et des métaux lourds et fabriquer une solution aqueuse de chlorure de sodium, selon lequel :
- dans une première étape, on traite la fumée, par voie sèche, avec du bicarbonate de sodium, de manière à décomposer le chlorure d'hydrogène de la fumée et former du chlorure de sodium solide;
- dans une deuxième étape, on sépare de la fumée recueillie de la première étape un résidu solide comprenant les métaux lourds et le chlorure de sodium solide;
- dans une troisième étape, on disperse le résidu solide de la deuxième étape dans une quantité suffisante d'eau pour y dissoudre le chlorure de sodium solide et former de la sorte un milieu aqueux comprenant une solution aqueuse de chlorure de sodium et les métaux lourds;
- dans une quatrième étape, on alcalinise le milieu aqueux de la troisième étape à un pH de 8 à 14 pour précipiter les métaux lourds à l'état d'hydroxydes de métaux lourds;
- dans une cinquième étape, on sépare le précipité d'hydroxydes de métaux lourds du milieu aqueux de la quatrième étape et on recueille une solution aqueuse de chlorure de sodium; et
- dans une sixième étape, on traite la solution de chlorure de sodium recueillie de la cinquième étape, sur une résine chélatante.

Dans le procédé selon l'invention, le traitement de la fumée par voie sèche avec du bicarbonate de sodium est un traitement dans lequel du bicarbonate de sodium est introduit à l'état solide dans la fumée, en l'absence d'un liquide, en particulier d'eau. En général, le bicarbonate de sodium est mis en oeuvre à l'état d'une poudre que l'on injecte dans un courant de fumée circulant à l'intérieur d'une chambre de réaction. Dans celle-ci, le bicarbonate de sodium décompose le chlorure d'hydrogène présent dans la fumée, en formant du chlorure de sodium. On a intérêt à utiliser une poudre de bicarbonate de sodium de granulométrie régulière et la plus fine possible, de manière à accélérer la décomposition du chlorure d'hydrogène. En règle générale, on recommande d'utiliser une poudre de bicarbonate de sodium dont le diamètre moyen des particules est inférieur à 50 µm. La granulométrie préférée correspond à un diamètre moyen des particules n'excédant pas 25 µm, par exemple compris entre 5 et 20 µm.

Le résidu solide recueilli à la deuxième étape du procédé selon l'invention contient du chlorure de sodium (résultant de la réaction du chlorure d'hydrogène avec le bicarbonate de sodium) et des métaux lourds, à l'état métallique ou combiné. Dans le cas d'une fumée contenant des oxydes de soufre, le produit solide contient aussi du sulfate de sodium (provenant de la réaction des oxydes de soufre avec le bicarbonate de sodium). Il contient généralement aussi du carbonate de sodium correspondant à l'excès de bicarbonate de sodium mis en oeuvre pour réagir avec le chlorure d'hydrogène et, le cas échéant, les oxydes de soufre.

A la troisième étape du procédé, on introduit le résidu solide susdit dans de l'eau. La quantité d'eau mise en oeuvre doit être au moins suffisante pour dissoudre la totalité du chlorure de sodium et des autres matières solubles du résidu solide. Nonobstant cette condition, la quantité d'eau n'est pas critique. On n'a toutefois pas intérêt à utiliser une quantité d'eau excédentaire. En variante, au lieu d'eau, on peut aussi utiliser une solution diluée de chlorure de sodium.

L'origine de la fumée n'est pas critique, celle-ci contenant nécessairement du chlorure d'hydrogène et des métaux lourds, à l'état métallique ou combiné. L'invention s'applique spécialement aux fumées produites par l'incinération d'ordures ménagères ou municipales, qui renferment habituellement des composés chlorés, des chlorures métalliques et des métaux lourds (VGB Kraftwerkstechnik, 69, Heft 2, 1989, pages 212-220). Selon l'origine des ordures, les métaux lourds emportés par les fumées comprennent le cadmium, le mercure, l'antimoine, le plomb, le cobalt, le chrome, le cuivre, le manganèse, le vanadium, l'étain, le fer, le nickel, le calcium, le magnésium, l'aluminium et le zinc, cette liste n'étant pas exhaustive.

Dans le procédé selon l'invention, les quatrième, cinquième et sixième étapes ont pour objectif d'extraire les métaux lourds du milieu aqueux recueilli de la troisième étape, et de produire une solution aqueuse épurée de chlorure de sodium. A cet effet, à la quatrième étape du procédé, on alcalinise le milieu aqueux de la troisième étape à un pH de 8 à 14, ce qui a pour effet de précipiter les métaux lourds.

L'alcalinité du milieu aqueux peut être réalisée par le carbonate de sodium dissous qu'il contient et qui correspond à l'excès de bicarbonate de sodium mis en oeuvre au traitement de la fumée. Au besoin, on peut procéder à une addition complémentaire d'une base inorganique, telle que du carbonate de sodium ou de l'hydroxyde de sodium par exemple.

Les résines chélatantes sont bien connues en technique. Elles comprennent un squelette polymérique sur lequel sont greffés des groupes fonctionnels complexants comprenant des cations interchangeables. Des exemples de polymères utilisables pour le squelette polymérique comprennent les polyoléfines (par exemple le polyéthylène), les polymères dérivés du styrène (par exemple des copolymères dérivés du styrène et du divinylbenzène) et les résines acryliques. La résine se présente généralement à l'état de granules, au contact desquels on fait circuler la solution aqueuse de chlorure de sodium recueillie de la cinquième étape.

Dans le procédé selon l'invention, on peut indifféremment mettre en oeuvre une résine chélatante du type H ou du type Na. Les résines du type Na (qui sont des résines dans lesquelles les cations interchangeables sont des cations sodium) sont toutefois préférées, car elles assurent, toutes autres choses restant égales, une extraction optimum des ions des métaux polyvalents, notamment du calcium, selon le processus décrit dans le document "The American Institute of Chemical Engineers, N° 219, Vol. 78, 1982, pages 46-53 : J.J. Wolff and R.E. Anderson, Ion-exchange purification of feed brine for chlor-alkali electrolysis cells; the role of Duolite ES-467". A l'issue du procédé, la résine doit être régénérée, ce qui peut être réalisé de manière connue en soi en la traitant avec une solution aqueuse d'acide chlorhydrique; dans le cas d'une résine de type Na, le traitement avec la solution d'acide chlorhydrique est suivi d'un traitement avec une solution aqueuse d'hydroxyde de sodium.

Des résines chélatantes préférées dans le cadre de l'invention, sont celles dans lesquelles les groupes fonctionnels comprennent un ligand de l'azote. Ceux-ci peuvent par exemple comprendre des composés dérivés des amines ou des imines. Des résines chélatantes spécialement recommandées sont celles comprenant des groupes fonctionnels dérivés d'acides organiques, celles comprenant des groupes fonctionnels dérivés d'acide iminodiacétique ou d'acide aminophosphonique étant préférées. De tels résines sont notamment décrites dans le brevet US-A-4002564 (DIAMOND SHAMROCK CORP.) et dans la demande de brevet EP-A-0087934 (DUOLITE INTERNATIONAL S.A.). Des exemples de résines utilisables dans le procédé selon l'invention sont celles commercialisées sous les marques DUOLITE (ROHM & HAAS COMPANY) et LEWATIT (BAYER AG). Dans le cas particulier où le milieu aqueux contient du mercure il est avantageux de faire précéder le traitement sur la résine contenant des ligands azote, d'un traitement sur une résine chélatante contenant des ligands soufre, dans le but d'y fixer le mercure.

Dans une variante particulière du procédé selon l'invention, avant d'alcaliniser le milieu aqueux à la quatrième étape, on l'acidifie et on le filtre. Dans cette variante de l'invention, l'acidification peut être opérée par addition d'une solution aqueuse d'acide chlorhydrique au milieu aqueux. Elle a pour fonction de décomposer le carbonate de sodium et de dissoudre les métaux lourds. La filtration sert à éliminer les matières insolubles, notamment les cendres volantes de la fumée.

Lorsque le milieu aqueux recueilli de la troisième étape contient des anions SO₄²⁻, il peut être souhaitable, pour certaines application, d'éviter que ces anions passent dans la solution aqueuse industrielle de chlorure de sodium. A cet effet, selon une autre variante du procédé selon l'invention, les anions SO₄²⁻ sont précipités à l'état de sulfate de calcium au moyen d'hydroxyde ou de chlorure de calcium. Dans cette variante d'exécution de l'invention, on peut opérer selon plusieurs voies distinctes.

Selon une première voie, l'hydroxyde ou le chlorure de calcium est additionné à la solution aqueuse recueillie de la cinquième étape, après séparation du précipité d'hydroxydes métalliques. Le sulfate de calcium précipite alors à l'état de gypse peu contaminé qui, de ce fait, peut être facilement valorisé industriellement ou rejeté tel quel en décharge. Le cas échéant, il ne nécessite pas de décharge spécialisée, ce qui constitue un avantage économique. Dans le cas où le milieu aqueux contient des ions carbonate, il est nécessaire de mettre en oeuvre une quantité suffisante d'hydroxyde ou de chlorure de calcium pour réagir avec les ions sulfate et avec les ions carbonate de la solution aqueuse, du carbonate de calcium précipitant alors avant la formation du sulfate de calcium.

Selon une deuxième voie opératoire, on acidifie le milieu aqueux recueilli de la troisième étape, par exemple par addition d'acide chlorhydrique, et on lui ajoute une quantité suffisante de chlorure de calcium pour former du sulfate de calcium avec les ions sulfate. L'acidification a pour objectif de décomposer les ions carbonate et de solubiliser les métaux lourds. Elle est de préférence réglée pour conférer au milieu aqueux une valeur de pH inférieure à 6, par exemple comprise entre 3 et 5. Après séparation du précipité de sulfate de calcium (généralement à l'état de gypse), on alcalinise le milieu aqueux (de préférence par addition d'hydroxyde de sodium) et on le traite ensuite comme exposé plus haut pour en extraire les métaux lourds.

Selon une troisième voie, on commence par acidifier le milieu aqueux, par exemple par addition d'acide chlorhydrique, puis on l'alcalinise en lui ajoutant de l'hydroxyde de calcium et, éventuellement, de l'hydroxyde de sodium. L'acidification est opérée dans les mêmes conditions que dans la deuxième voie précitée de manière à décomposer les ions carbonate et solubiliser les métaux lourds. La quantité d'hydroxyde de calcium mise en oeuvre par la suite doit être au moins suffisante pour réagir avec la totalité des anions sulfate du milieu aqueux; par ailleurs, la quantité globale d'hydroxyde de calcium et d'hydroxyde de sodium doit être suffisante pour réaliser un pH alcalin (de préférence au moins égal à 8) dans le milieu aqueux. Dans cette troisième voie opératoire du procédé, le sulfate de calcium (généralement à l'état de gypse) et les hydroxydes métalliques précipitent simultanément, ce qui constitue un avantage. On a en effet observé que cette coprécipitation facilite et accélère la sédimentation du précipité et améliore la séparation subséquente du précipité et la récupération du liquide aqueux.

Le procédé selon l'invention permet d'obtenir des solutions aqueuses industrielles de chlorure de sodium de très grande pureté, dont la teneur en ions de métaux polyvalents est inférieure à 1 ppm. Il permet notamment d'obtenir des solutions aqueuses saturées de chlorure de sodium qui présentent une teneur pondérale en calcium inférieure à 0,1 ppm et n'excédant généralement pas 0,05 ppm.

Les solutions aqueuses de chlorure de sodium obtenues au moyen du procédé selon l'invention trouvent dès lors diverses applications dans l'industrie. Elles peuvent notamment servir de matière première pour la fabrication de carbonate de sodium par le procédé de la soude à l'ammoniaque (Manufacture of Soda-Te-Pang Hou - Hafner Publishing Company - 1969), pour la fabrication électrolytique de chlore et de solutions aqueuses d'hydroxyde de sodium, pour la fabrication électrolytique de solutions aqueuses de chlorate de sodium, ainsi que pour la fabrication de sel solide.

L'invention concerne dès lors aussi l'utilisation de la solution aqueuse de chlorure de sodium obtenue au moyen du procédé selon l'invention, pour la fabrication d'une solution aqueuse d'hydroxyde de sodium par électrolyse ou électrodialyse. Des procédés de fabrication électrolytique de solutions aqueuses d'hydroxyde de sodium sont bien connus en technique et comprennent notamment le procédé en cellules à cathode de mercure et le procédé en cellules à membranes sélectivement perméables aux cations (Chlorine, Its manufacture, Properties and Uses - J. S. Sconce - Reinhold Publishing Corporation, New York - 1962-pages 127 à 199; brevet européen EP-B-0253430 et demandes de brevet belge 09000497 et 09000924, tous trois au nom de SOLVAY & CIE). Des procédés de fabrication de solutions aqueuses d'hydroxyde de sodium par électrodialyse sont également bien connus en technique (Brevet US-A-2829095 - NOGUCHI KENKYU-JO). Selon l'invention, on utilise comme matière première dans l'électrolyse ou l'électrodialyse, une solution aqueuse industrielle de chlorure de sodium, obtenue au moyen du procédé conforme à l'invention, décrit plus haut.

Un autre objet de l'invention est l'utilisation de la solution aqueuse de chlorure de sodium obtenue au moyen du procédé selon l'invention, pour la fabrication de cristaux de chlorure de sodium. La fabrication de cristaux de chlorure de sodium de grande pureté par évaporation de solutions aqueuses de chlorure de sodium est bien connue en technique (Sodium Chloride - Dale W. Kaufmann - Reinhold Publishing Corporation, New York-1960 - pages 205 à 274; demande de brevet européen EP-A-0352847-SOLVAY & CIE). Selon l'invention, on utilise, pour la solution aqueuse de chlorure de sodium soumise à l'évaporation, une solution aqueuse industrielle obtenue au moyen du procédé conforme à l'invention, décrit plus haut.

Un objet supplémentaire de l'invention est l'utilisation de la solution aqueuse industrielle de chlorure de sodium pour la fabrication de carbonate de sodium par la technique de la soude à l'ammoniaque ou par la technique aux amines insolubles. La technique de la soude à l'ammoniaque (également appelée "Procédé Solvay") est bien connue et comprend la dissolution de gaz ammoniac dans une solution aqueuse de chlorure de sodium de manière à produire une saumure ammoniacale, le traitement de cette saumure ammoniacale avec un gaz contenant de l'anhydride carbonique de manière à cristalliser du bicarbonate de sodium et la conversion de ce dernier en carbonate de sodium (Te-Pang Hou, Manufacture of Soda with special reference to the Ammonia Process, 1969, Hafner Publishing Company). Dans la technique aux amines, on mélange une solution aqueuse de chlorure de sodium et une solution organique d'une amine insoluble dans l'eau, et on traite le mélange résultant avec un gaz contenant de l'anhydride carbonique pour cristalliser du bicarbonate de sodium que l'on recueille et que l'on convertit ensuite en carbonate de sodium [Brevets GB-A-1084436 (KAISER ALUMINUM & CHEMICAL CORPORATION) et FR-A-2545079 (SOLVAY & Cie)]. Selon l'invention, la solution aqueuse de chlorure de sodium utilisée dans ces deux techniques est une solution aqueuse industrielle obtenue au moyen du procédé conforme à l'invention, décrit plus haut.

L'invention réalise de manière originale et économique, une valorisation de résidus provenant de l'épuration de fumée. Elle est tout spécialement adaptée au traitement des fumées provenant des installations d'incinération des ordures ménagères ou municipales.

Des particularités et détails de l'invention vont apparaître au cours de la description qui va suivre de quelques formes de réalisation, en référence aux dessins annexés.

La figure 1 représente le schéma d'une installation mettant en oeuvre une forme de réalisation particulière de l'invention.

Les figures 2, 3 et 4 sont trois schémas analogues à celui de la figure 1, d'installations mettant respectivement en oeuvre trois autres formes de réalisation de l'invention.

Dans ces figures, des mêmes notations de référence désignent des éléments identiques.

Les installations représentées aux figures sont conçues pour épurer une fumée provenant de l'incinération d'ordures ménagères ou municipales et pour valoriser les effluents recueillis de l'épuration de cette fumée. Cette fumée contient du chlorure d'hydrogène, du dioxyde de soufre et des métaux polyvalents (par exemple : cadmium, mercure, antimoine, plomb, cobalt, chrome, cuivre, manganèse, vanadium, étain, nickel, calcium, magnésium, aluminium, zinc, cette liste n'étant pas exhaustive). Elle contient en outre des cendres volantes. Cette fumée est désignée par la notation de référence 2 sur le dessin annexé.

Les installations comprennent un réacteur tubulaire 3 alimenté, à sa partie inférieure, par la fumée 2 émise par un four d'incinération d'ordures ménagères 1. Du bicarbonate de sodium 4 à l'état d'une poudre annhydre, est injecté dans la fumée 2 dans le réacteur 3. Dans le réacteur 3, le bicarbonate de sodium réagit avec le chlorure d'hydrogène de la fumée, en formant du chlorure de sodium. Il réagit par ailleurs avec le dioxyde de soufre en formant du sulfate de sodium. La fumée 5 extraite à la partie supérieure du réacteur 3 traverse un dispositif de dépoussiérage 6, puis est évacuée à la cheminée 7. Du fait que la fumée 5 est sèche, le dispositif de dépoussièrage 6 peut avantageusement consister en un séparateur mécanique à tissus filtrants (filtre à manches) dont l'efficacité est optimum. D'autres types de séparateurs sont également utilisables, tels que des filtres électrostatiques par exemple.

Dans le dispositif de dépoussiérage 6, la fumée 5 est débarrassée des particules solides 8 qu'elle contient. Celles-ci comprennent du chlorure de sodium, du sulfate de sodium, du carbonate de sodium, des métaux polyvalents et des cendres volantes.

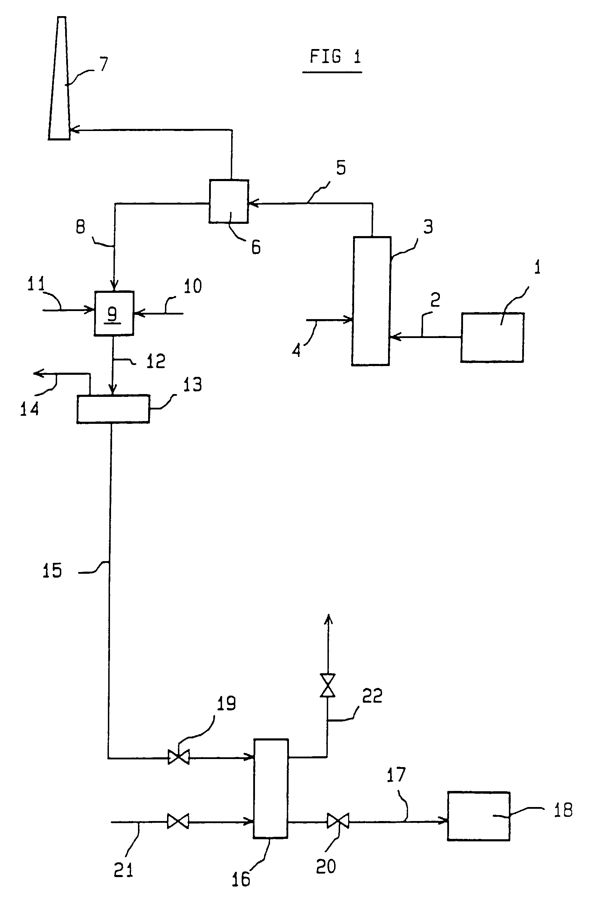

Dans l'installation représentée à la figure 1, on introduit ce produit solide 8 dans une chambre de dissolution 9 où on le disperse dans une quantité suffisante d'eau 10 pour dissoudre la totalité des matières hydrosolubles qu'il contient. Le milieu aqueux ainsi obtenu est généralement alcalin. On amène son pH à une valeur comprise entre 8 et 14 par addition d'une solution aqueuse 11 d'hydroxyde de sodium ou d'acide chlorhydrique, selon que son pH initial est inférieur ou supérieur à la valeur recherchée. Le milieu aqueux alcalin 12 soutiré de la chambre 9 contient les métaux polyvalents à l'état d'hydroxydes métalliques insolubles. Il est traité sur un filtre 13 pour séparer les matières insolubles 14 (cendres volantes et hydroxydes des métaux polyvalents). Le liquide aqueux 15 recueilli du filtre 13 est une solution aqueuse de chlorure de sodium, de sulfate de sodium et de carbonate de sodium. Il est contaminé par des métaux polyvalents dissous en une quantité généralement trop élevée pour permettre son utilisation dans un procédé industriel. Selon l'invention, on le fait circuler dans une colonne 16 au contact d'une résine chélatante comprenant des groupes fonctionnels du type Na, dérivés d'acide aminophosphonique. Dans la colonne 16 s'opère dès lors un échange ionique entre les cations sodium de la résine et les cations polyvalents du liquide aqueux 15. On recueille de la colonne 16 une solution aqueuse industrielle de chlorure de sodium 17, de pureté suffisante pour qu'elle puisse être utilisée telle quelle dans un procédé industriel. La solution 17 contenant du sulfate et du carbonate de sodium dissous, elle trouve une utilisation dans une installation industrielle 18 servant à la fabrication de carbonate de sodium par la technique de la soude à l'ammoniaque.

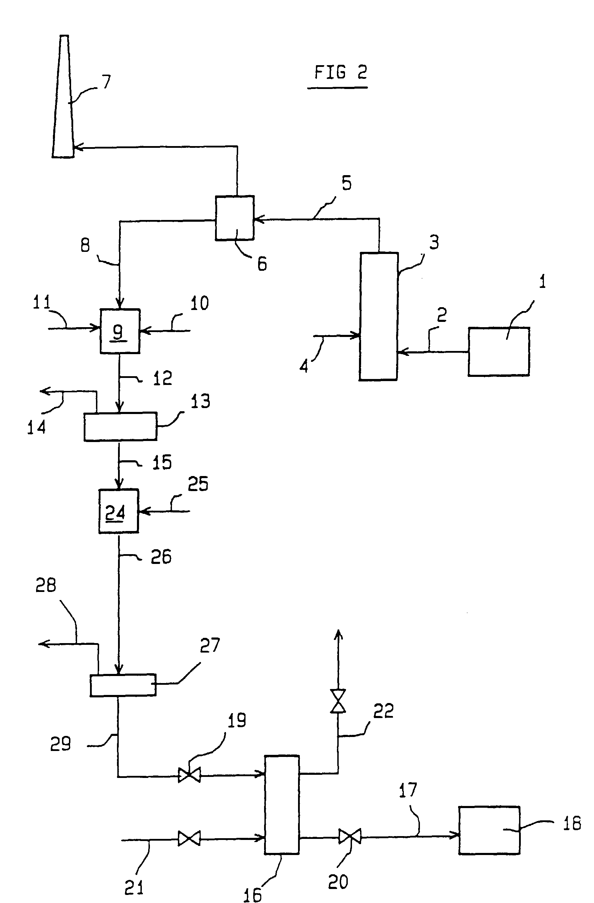

Dans l'installation représentée à la figure 2, le liquide aqueux alcalin 15 (solution aqueuse de chlorure de sodium, de sulfate de sodium et de carbonate de sodium, contaminée par des métaux polyvalents dissous) est obtenu de la manière exposée ci-dessus en référence à la figure 1. Il est envoyé dans une chambre de réaction 24, où on lui additionne une solution aqueuse de chlorure de calcium 25 en une quantité suffisante pour réagir avec la totalité du carbonate et du sulfate de sodium et précipiter du carbonate de calcium et du sulfate de calcium (gypse). La suspension aqueuse 26 recueillie de la chambre de réaction 24 est traitée sur un filtre 27 pour en séparer le précipité 28 de carbonate et de sulfate de calcium que l'on écarte. La solution aqueuse de chlorure de sodium 29 recueillie du filtre 27 est envoyée dans la colonne 16 pour y être traitée sur la résine chélatante comme exposé plus haut en référence à la figure 1.

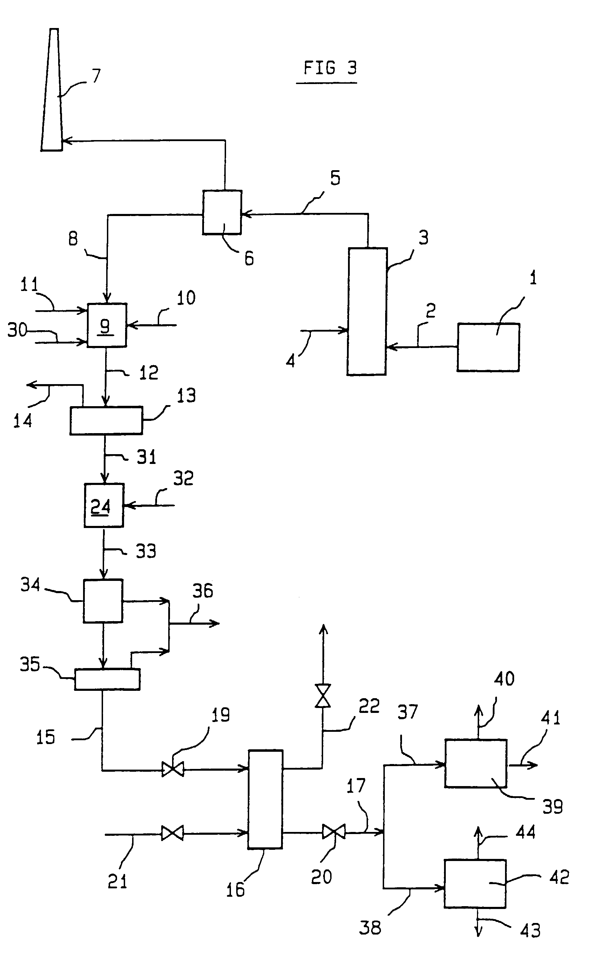

Dans l'installation représentée à la figure 3, on introduit dans la chambre de réaction 9 une quantité suffisante d'acide chlorhydrique 11 pour acidifier le milieu aqueux qui s'y trouve, décomposer les ions carbonate et dissoudre les métaux polyvalents. On y introduit en outre une solution aqueuse de chlorure de calcium 30 en quantité suffisante pour réagir avec le sulfate de sodium et précipiter du gypse.

Le milieu aqueux acide 12 recueilli de la chambre de réaction 9 est envoyé sur le filtre 13, où on sépare les matières insolubles 14 (sulfate de calcium et cendres volantes). On recueille du filtre 13 une solution aqueuse 31 de chlorure de sodium, exempte de sulfate et de carbonate de sodium et contenant les métaux polyvalents à l'état dissous. La solution 31 est envoyée dans la chambre de réaction 24, où on l'alcalinise à pH compris entre 8 et 14 par addition d'une solution aqueuse d'hydroxyde de sodium 32. L'alcalinisation a pour résultat de précipiter les métaux polyvalents à l'état d'hydroxydes métalliques. On recueille dès lors de la chambre 24 une suspension aqueuse 33 que l'on traite successivement dans une chambre de décantation 34 et sur un filtre 35, où l'on en sépare un précipité 36 d'hydroxydes de métaux polyvalents que l'on écarte. Le liquide aqueux 15 recueilli du filtre 35 est une solution aqueuse de chlorure de sodium, contaminée par des métaux polyvalents dissous. Il est envoyé dans la colonne 16 pour y être traité comme exposé plus haut en référence à la figure 1. La solution 17 recueillie de la colonne 16 est une solution aqueuse de chlorure de sodium de grande pureté, sensiblement exempte de métaux polyvalents et d'ions sulfate et carbonate. Elle est répartie en deux fractions 37 et 38.

La fraction 37 est envoyée, conformément à l'invention, dans une cellule d'électrolyse 39 équipée de membranes sélectivement perméables aux cations. Dans la cellule d'électrolyse 39, la solution 37 subit de manière connue en soi une électrolyse conduisant à la production de chlore 40 et d'une solution aqueuse d'hydroxyde de sodium 41.

La fraction 38 est envoyée dans un évaporateur 42 duquel on recueille du chlorure de sodium cristallisé 43 et de la vapeur d'eau 44. Le chlorure de sodium solide 43 trouve diverses applications industrielles.

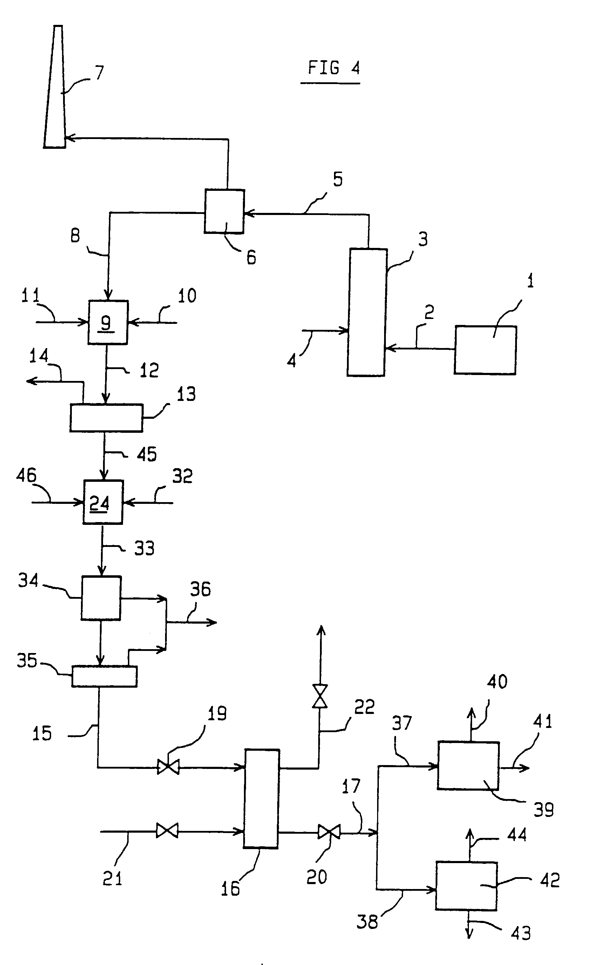

Dans l'intallation représentée à la figure 4, on introduit dans la chambre de dissolution 9 une quantité suffisante d'acide chlorhydrique 11 pour acidifier le milieu aqueux qui s'y trouve, décomposer les ions carbonate et dissoudre les métaux polyvalents.

Le milieu aqueux acide 12 recueilli de la chambre de réaction 9 est une solution aqueuse de chlorure de sodium et de sulfate de sodium, contenant en outre des métaux polyvalents dissous. On l'envoie sur le filtre 13, où on sépare les matières insolubles 14 (essentiellement des cendres volantes). On recueille du filtre 13 une solution aqueuse 45 de chlorure de sodium et de sulfate de sodium, contenant les métaux polyvalents à l'état dissous. La solution 45 est envoyée dans la chambre de réaction 24. Dans la chambre 24, on va alcaliniser la solution 45 à pH compris entre 8 et 14 et on va en outre précipiter les cations sulfate qu'elle contient, à l'état de gypse. A cet effet, on introduit dans la chambre 24 un lait de chaux 46 en une quantité suffisante pour décomposer la totalité du sulfate de sodium de la solution 45 et, en cas de besoin, on réalise aussi un appoint 32 d'une solution aqueuse d'hydroxyde de sodium pour amener le pH à la valeur souhaitée, entre 8 et 14. Les métaux polyvalents coprécipitent ainsi à l'état d'hydroxydes métalliques avec le sulfate de calcium. On recueille dès lors de la chambre 24 une suspension aqueuse 33 que l'on traite successivement dans la chambre de décantation 34 et sur le filtre 35, où l'on en sépare un coprécipité 36 d'hydroxydes de métaux polyvalents et de gypse que l'on écarte. On recueille du filtre 35 un liquide aqueux 15 que l'on traite comme exposé ci-dessus en référence à la figure 3.

Dans une variante d'exécution particulière des formes de réalisation des figures 1 à 4, la fumée 2 est traitée sur un filtre approprié, non représenté, pour en séparer les cendres volantes, puis est introduite dans le réacteur 3.

Dans les formes de réalisation décrites ci-dessus en références aux figures 1 à 4, la résine chélatante de la colonne 16 doit être régénérée périodiquement. A cet effet, on isole la colonne 16 des conduits 15 (ou 29) et 17 au moyen de vannes d'isolation 19 et 20, on opère ensuite en deux étapes successives, comme décrit dans le document "The American Institute of Chemical Engineers, N° 219, Vol. 78, 1982, pages 46-53 : J.J. Wolff and R.E. Anderson, Ion-exchange purification of feed brine for chlor-alkali electrolysis cells; the role of Duolite ES-467". Dans une première étape, on introduit dans la colonne 16, via le conduit 21, une solution aqueuse d'acide chlorhydrique, pour substituer des protons sur les sites actifs de la résine chélatante et on recueille via le conduit 22, une solution aqueuse diluée d'acide chlorhydrique contenant les métaux polyvalents. Dans la seconde étape, on introduit par le conduit 21 une solution aqueuse d'hydroxyde de sodium, pour substituer des cations sodium au protons des sites actifs de la résine et on recueille une solution aqueuse diluée d'hydroxyde de sodium par le conduit 22. La solution aqueuse diluée d'acide chlorhydrique et la solution aqueuse diluée d'hydroxyde de sodium peuvent être recyclées dans le procédé. Par exemple, dans le cas de la forme de réalisation de la figure 4, la solution aqueuse diluée d'hydroxyde de sodium peut être recyclée dans la chambre de réaction 9 et la solution aqueuse diluée d'hydroxyde de sodium peut être recyclée dans la chambre de réaction 24.

## Revendications

1. Procédé pour, en combinaison, épurer une fumée contenant du chlorure d'hydrogène et des métaux lourds et fabriquer une solution aqueuse de chlorure de sodium, selon lequel :
- dans une première étape, on traite la fumée, par voie sèche, avec du bicarbonate de sodium, de manière à décomposer le chlorure d'hydrogène de la fumée et former du chlorure de sodium solide;
- dans une deuxième étape, on sépare de la fumée recueillie de la première étape un résidu solide comprenant les métaux lourds et le chlorure de sodium solide;
- dans une troisième étape, on disperse le résidu solide de la deuxième étape dans une quantité suffisante d'eau pour y dissoudre le chlorure de sodium solide et former de la sorte un milieu aqueux comprenant une solution aqueuse de chlorure de sodium et les métaux lourds;
- dans une quatrième étape, on alcalinise le milieu aqueux de la troisième étape à un pH de 8 à 14 pour précipiter les métaux lourds à l'état d'hydroxydes de métaux lourds;
- dans une cinquième étape, on sépare le précipité d'hydroxydes de métaux lourds du milieu aqueux de la quatrième étape et on recueille une solution aqueuse de chlorure de sodium; et
- dans une sixième étape, on traite la solution de chlorure de sodium recueillie de la cinquième étape, sur une résine chélatante.

2. Procédé selon la revendication 1, caractérisé en ce que les métaux lourds de la fumée sont des métaux du groupe comprenant le cadmium, le mercure, l'antimoine, le plomb, le cobalt, le chrome, le cuivre, le manganèse, le vanadium, l'étain, le fer, le nickel, l'aluminium et le zinc.

3. Procédé selon la revendication 1 ou 2, caractérisé en ce qu'on met en oeuvre une fumée obtenue en incinérant des ordures ménagères ou municipales contenant des métaux lourds et des composés chlorés.

4. Procédé selon l'une quelconque des revendications 1 à 3, caractérisé en ce qu'on met en oeuvre, à la sixième étape, une résine chélatante comprenant des groupes fonctionnels dérivés d'acide iminodiacétique et/ou aminophosphonique.

5. Procédé selon la revendication 4, caractérisé en ce qu'on met en oeuvre une résine chélatante du type Na.

6. Procédé selon l'une quelconque des revendications 1 à 5, caractérisé en ce qu'avant d'alcaliniser le milieu aqueux à la quatrième étape, on l'acidifie et on le filtre.

7. Procédé selon la revendication 6, caractérisé en ce que, dans le cas où le milieu aqueux de la quatrième étape contient des ions SO₄²⁻, on lui additionne du chlorure de calcium en même temps qu'on l'acidifie, de manière à précipiter du sulfate de calcium.

8. Procédé selon la revendication 6, caractérisé en ce que, dans le cas où le milieu aqueux de la quatrième étape contient des ions SO₄²⁻, on lui additionne de l'(hydr)oxyde de calcium en une quantité au moins suffisante pour réagir avec la totalité des ions SO₄²⁻ et pour alcaliniser ledit milieu aqueux.

## Patentansprüche

1. Verfahren zur Reinigung eines Chlorwasserstoff und Schwermetalle enthaltenden Rauchgases und gleichzeitig zur Herstellung einer wässrigen Natriumchloridlösung, wobei man:
- in einer ersten Stufe das Rauchgas trocken mit Natriumbicarbonat behandelt, um den Chlorwasserstoff in dem Rauchgas zu zersetzen und festes Natriumchlorid zu bilden;
- in einer zweiten Stufe aus dem in der ersten Stufe gewonnenen Rauchgas einen festen Rückstand abtrennt, der Schwermetalle und festes Natriumchlorid enthält;
- in einer dritten Stufe den festen Rückstand der zweiten Stufe in einer ausreichenden Menge Wasser verteilt, um das feste Natriumchlorid darin zu lösen und auf diese Weise ein wässriges Medium zu bilden, das eine wässrige Lösung von Natriumchlorid und Schwermetalle enthält;
- in einer vierten Stufe das wässrige Medium der dritten Stufe alkalisch macht auf einen pH von 8 bis 14, um die Schwermetalle als Schwermetallhydroxide auszufällen;
- in einer fünften Stufe den Niederschlag aus Schwermetallhydroxiden von dem wässrigen Medium der vierten Stufe abtrennt und eine wässrige Natriumchloridlösung gewinnt und
- in einer sechsten Stufe die Natriumchloridlösung der fünften Stufe mit einem komplexbildenden Harz behandelt.

2. Verfahren nach Anspruch 1, **dadurch gekennzeichnet**, daß die Schwermetalle in dem Rauchgas Metalle sind aus der Gruppe bestehend aus Cadmium, Quecksilber, Antimon, Blei, Kobalt, Chrom, Kupfer, Mangan, Vanadium, Zinn, Eisen, Nickel, Aluminium und Zink.

3. Verfahren nach Anspruch 1 oder 2, **dadurch gekennzeichnet**, daß man ein Rauchgas verwendet, das bei der Verbrennung von Hausmüll oder städtischem Müll erhalten wurde, das Schwermetalle und Chlorverbindungen enthält.

4. Verfahren nach einem der Ansprüche 1 bis 3, **dadurch gekennzeichnet** , daß man in der sechsten Stufe ein komplexbildendes Harz verwendet, das funktionelle Gruppen aufweist, die von Iminodiessigsäure und/oder Aminophosphonsäure abgeleitet sind.

5. Verfahren nach Anspruch 4, **dadurch gekennzeichnet**, daß man ein komplexbildendes Harz in Na-Form verwendet.

6. Verfahren nach einem der Ansprüche 1 bis 5, **dadurch gekennzeichnet**, daß man das wässrige Medium, bevor man es in der vierten Stufe alkalisch macht, ansäuert und filtriert.

7. Verfahren nach Anspruch 6, **dadurch gekennzeichnet**, daß man, wenn das wässrige Medium der vierten Stufe SO₄²⁻ -Ionen enthält, bei der Ansäuerung gleichzeitig Calciumchlorid zugibt, um Calciumsulfat auszufällen.

8. Verfahren nach Anspruch 6, **dadurch gekennzeichnet**, daß man, wenn das wässrige Medium der vierten Stufe SO₄²⁻ -Ionen enthält, Calcium(hydr)oxid zugibt in einer Menge, die ausreicht, um mit allen SO₄²⁻ -Ionen zu reagieren und das wässrige Medium alkalisch zu machen.

## Claims

1. Process for, in combination, purifying a smoke containing hydrogen chloride and heavy metals and manufacturing an aqueous solution of sodium chloride, according to which:
- in a first stage the smoke is treated, by a dry route, with sodium bicarbonate, so as to decompose the hydrogen chloride in the smoke and to form solid sodium chloride;
- in a second stage a solid residue including the heavy metals and the solid sodium chloride is separated from the smoke collected from the first stage;
- in a third stage the solid residue from the second stage is dispersed in a sufficient quantity of water in order to dissolve the solid sodium chloride therein and thus to form an aqueous mixture including an aqueous solution of sodium chloride and the heavy metals;
- in a fourth stage the aqueous mixture from the third stage is alkalified to a pH of 8 to 14 to precipitate the heavy metals in the form of heavy-metal hydroxides;
- in a fifth stage the precipitate of heavy-metal hydroxides is separated from the aqueous mixture from the fourth stage and an aqueous solution of sodium chloride is collected; and
- in a sixth stage the sodium chloride solution collected from the fifth stage is treated on a chelating resin.

2. Process according to Claim 1, characterized in that the heavy metals in the smoke are metals of the group including cadmium, mercury, antimony, lead, cobalt, chromium, copper, manganese, vanadium, tin, iron, nickel, aluminium and zinc.

3. Process according to Claim 1 or 2, characterized in that a smoke obtained by incinerating domestic or municipal waste containing heavy metals and chlorine compounds is used.

4. Process according to any one of Claims 1 to 3, characterized in that, in the sixth stage, a chelating resin including functional groups derived from iminodiacetic and/or aminophosphonic acid is used.

5. Process according to Claim 4, characterized in that a chelating resin of the Na type is used.

6. Process according to any one of Claims 1 to 5, characterized in that before the aqueous mixture is alkalified in the fourth stage it is acidified and is filtered.

7. Process according to Claim 6, characterized in that, in the case where the aqueous mixture in the fourth stage contains SO₄²⁻ ions, calcium chloride is added to it at the same time as it is acidified, so as to precipitate calcium sulphate.

8. Process according to Claim 6, characterized in that, in the case where the aqueous mixture from the fourth stage contains SO₄²⁻ ions, calcium (hydr)oxide is added to it in a quantity which is at least sufficient to react with all of the SO₄²⁻ ions and to alkalify the said aqueous mixture.
